# EUROPÄISCHE PATENTSCHRIFT

(11) **EP 1 973 692 B1**
(45) Veröffentlichungstag und Bekanntmachung des Hinweises auf die Patenterteilung: **16.12.2009**
(21) Anmeldenummer: 07703994.9
(22) Anmeldetag: 18.01.2007
(51) Int. Cl.: B23P 19/04, B60J 10/00

(54) **VERFAHREN UND ANLAGE ZUM APPLIZIEREN EINER UMLAUFENDEN DICHTUNG AN EINEM ÖFFNUNGSABSCHLUSS, INSBESONDERE EINER TÜR, EINES KRAFTFAHRZEUGES**
METHOD AND SYSTEM FOR APPLYING AN ENCIRCLING SEAL TO A CLOSURE OF AN OPENING, IN PARTICULAR OF A DOOR, OF A MOTOR VEHICLE
PROCEDE ET SYSTEME D'APPLICATION D'UN JOINT D'ETANCHEITE PERIPHERIQUE SUR LA FERMETURE D'UNE OUVERTURE, EN PARTICULIER LA PORTE D'UN VEHICULE AUTOMOBILE

(30) Priorität: 20.01.2006 DE 102006003095
(43) Veröffentlichungstag der Anmeldung: 01.10.2008
(73) Patentinhaber: ThyssenKrupp Drauz Nothelfer GmbH, 74076 Heilbronn (DE)
(72) Erfinder: FENGER, Norbert, 66773 Schwalbach/Elm (DE)
(74) Vertreter: Cohausz & Florack
(86) Internationale Anmeldenummer: PCT/EP2007/050500
(87) Internationale Veröffentlichungsnummer: WO 2007/082915

(56) Entgegenhaltungen:
- EP-A1- 0 849 106
- WO-A-03/091055
- DE-A1- 10 138 781
- DE-C1- 19 704 327
- FR-A- 2 646 370
- GB-A- 2 244 302

## Beschreibung

Die Erfindung betrifft ein Verfahren zum Applizieren einer umlaufenden Dichtung an einem Öffnungsabschluss, insbesondere einer Tür, eines Kraftfahrzeuges, bei dem die von über die gesamte Länge der Dichtung verteilten Aufsteck- und Andrückelementen einer Spannplatte als geschlossener Ring aufgespannt gehaltene Dichtung mit einer freien Klebefläche passgenau an eine Anklebefläche des Öffnungsabschlusses herangeführt und über ihre gesamte Länge angedrückt wird, bevor sie von den Aufsteck- und Andrückelementen gelöst wird.

Bei einem bekannten Verfahren dieser Art (EP 0 849 106 B1) wird von einer Ringdichtung ausgegangen, die auf die Aufsteck- und Andrückelemente einer Spannplatte gesteckt wird. Mit dieser Spannplatte wird die Dichtung an den Öffnungsabschluss, z.B. einer Kfz-Tür, herangeführt, die von einem Gestell getragen wird. Zwischen dem Gestell und der Spannplatte gibt es Referenzpunkte, die ein passgenaues Heranführen und Anbringen der Dichtung gewährleisten. Diese Art des Anbringens einer Dichtung an einer Kfz-Tür wird in der Praxis seit langem angewandt. Als nachteilig wird allerdings die aufwendige Platzierung der ringförmigen Dichtung auf die Aufsteck- und Andrückelemente angesehen, die in der Regel von Hand gemacht werden muss. Dies führt ebenso zu erhöhten Produktionskosten wie die Herstellung eines vollständig geschlossenen Dichtungsrings in einem separaten Arbeitsgang vor dem Aufstecken auf die Spannplatte.

Daneben gibt es rein maschinelle Verfahren, bei denen die Dichtung von einem Dichtungsband mittels eines Anrollkopfes abgelängt und in einem Arbeitsgang am Öffnungsabschluss appliziert wird. Allerdings können bei diesem Verfahren Probleme im Hinblick auf die Prozesssicherheit auftreten.

So können bei einem bekannten Verfahren und einer bekannten Vorrichtung (DE 101 38 781 A1) ein oder mehrere Führungsmittel für das Dichtungsprofil vorgesehen sein, die zwischen dem Punkt, an dem es von einer Vorratsrolle abgezogen wird, und dem Punkt, an dem es mit dem Anbringungsort am Bauteil in Kontakt gebracht wird, vorgesehen sind. Vorzugsweise sind die Führungsmittel als angetriebene Führungsrollen ausgebildet. Bei diesem Verfahren und dieser Vorrichtung kann sich deshalb das Dichtungsprofil zwischen den Führungsmitteln und der Andrückrolle, und damit auch dem Anbringungsort, mehr oder weniger frei bewegen, jedenfalls zeigt die Erfahrung, dass auf diese Art und Weise eine exakte Positionierung des Dichtungsprofils am Anbringungsort nicht gewährleistet ist.

Bei einem anderen bekannten Verfahren und einer anderen bekannten Vorrichtung (WO 03/091055 A1) sind der Andrückrolle am Anbri-ngungsort ebenfalls Führungsmittel in Form von angetriebenen Rollen vorgeordnet. Zusätzlich ist die Andrückfläche der Andrückrolle profiliert, insbesondere genutet, um einen rückseitig am Dichtungsprofil angeordneten Steg aufzunehmen. Damit ist zwar eine zusätzliche Führung am Anbringungsort gegeben, doch ist der Einsatz einer solchen Vorrichtung auf Dichtungsprofile mit einer entsprechenden Profilgeometrie, insbesondere mit rückseitig angeordneten Stegen, beschränkt.

Schließlich ist ein Verfahren zum Applizieren einer umlaufenden Dichtung an einem Öffnungsabschluss, insbesondere einem Schiebedach eines Kraftfahrzeuges, bekannt (DE 197 04 327 C1), bei dem mittels einer Applikationseinrichtung ein selbstklebendes Endlosdichtungsband von einer Vorratsrolle abgelängt und mittels einer Anrollrolle der Applikationsvorrichtung unmittelbar an den Öffnungsabschluss angeklebt wird. Die Applikationsvorrichtung ist dafür auf einem dem Verlauf des Öffnungsabschlusses entsprechenden Rahmen längs des Öffnungsabschlusses verfahrbar angeordnet, wobei die Anrollrolle in der Höhe und Richtung steuerbar ist. Der dafür zu treibende konstruktive Aufwand der Applikationsvorrichtung ist groß.

Der Erfindung liegt die Aufgabe zugrunde, ein Verfahren und eine Anlage zum Anbringen einer Dichtung an einem Öffnungsabschluss zu entwickeln, mit dem bzw. mit der eine Dichtung ohne aufwendige Handarbeit sicher und genau am Dichtungsort des Öffnungsabschlusses platziert wird.

Bei einem Verfahren der eingangs genannten Art wird diese Aufgabe dadurch gelöst, dass die Dichtung mittels eines stationären Anrollkopfes von einem Endlosdichtungsband abgelängt und auf die Aufsteck- und Andrückelemente aufgesteckt wird, indem die Spannplatte mit den Aufsteck- und Andrückelementen am Anrollkopf vorbeibewegt wird, und dass dann die Dichtung an ihren beiden Enden zum Ring stumpf verklebt wird.

Beim erfindungsgemäßen Verfahren sind die vorteilhaften Aspekte der an sich bekannten Techniken des Applizierens einer als geschlossener Ring vorgefertigten Dichtung mittels einer Spannplatte und des unmittelbaren Applizierens der Dichtung von einem Endlosdichtungsband kombiniert, so dass insgesamt das Applizieren mit wenig Aufwand und höchster Genauigkeit erfolgt. Das Fertigen eines geschlossenen Dichtungsrings in einem vorgeschalteten.Arbeitsschritt, wie es bei der herkömmlichen Spannplattentechnik üblich ist, entfällt.

Um einerseits die Dichtung dem Anbringungsort problemlos zuzuführen und andererseits ihre Positionierung am Anbringungsort zu begünstigen, kann die Dichtung nach Verbinden ihrer beiden Enden zu einem geschlossenen Dichtungsring radial aufgeweitet werden. Diese Dichtung nimmt nach dem Lösen von den Aufsteck- und Andrückelementen dann die Position ein, die gewünscht wird.

Üblicherweise wird die Dichtung mit Kleber an dem Öffnungsabschluss angeklebt. Besonders vorteilhaft ist diese Art des Anklebens dann, wenn beim Ablängen des an seiner Klebefläche mit einer Schutzfolie abgedeckten Dichtungsbandes die Schutzfolie abgezogen wird. Man erspart sich dann den Kleberauftrag. Entsprechend mit Kleber und Schutzfolie ausgerüstete Endlosdichtungsbänder sind daher kostengünstig einsetzbar.

Gegenstand der Erfindung ist ferner eine Anlage zum Applizieren einer umlaufenden Dichtung an einem Öffnungsabschluss, insbesondere einer Tür eines Kraftfahrzeuges, insbesondere zur Anwendung bei dem beschriebenen Verfahren. Diese Anlage weist eine erste Station auf, die einen stationären Anrollkopf mit Transport- und Führungsmitteln sowie Ablängmitteln für die von einem Endlosdichtungsband ablängbare Dichtung und einer gegenüber dem Anrollkopf bewegbaren Spannplatte mit darauf in ihren Positionen entsprechend der Kontur der Anklebefläche der Dichtung am Öffnungsabschluss einrichtbaren Aufsteck- und Andrückelementen aufweist, und die ferner eine zweite Station umfasst, in der die Spannplatte und der Öffnungsabschluss mit Transport- und Haltemitteln passgenau zusammenführbar sind und mit den Andrückelementen die aufgesteckte Dichtung an die Anklebefläche des Öffnungsanschlusses andrückbar ist.

Im Folgenden wird die Erfindung anhand einer eine zwei Stationen umfassenden Anlage zum Applizieren einer Dichtung an einer Kraftfahrzeugtür näher erläutert. Im einzelnen zeigen:
- Fig. 1: die erste Station der Anlage mit stationärem Anrollkopf und gegenüber dem Anrollkopf bewegbarer Spannplatte,
- Fig. 2: die zweite Station mit Spannplatte und Kfz-Tür,
- Fig. 3: die erste Station in vergrößertem Ausschnitt beim Aufstecken der Dichtung durch den Anrollkopf und
- Fig. 4: die zweite Station im vergrößerten Ausschnitt beim Anbringen der Dichtung an der Kfz-Tür.

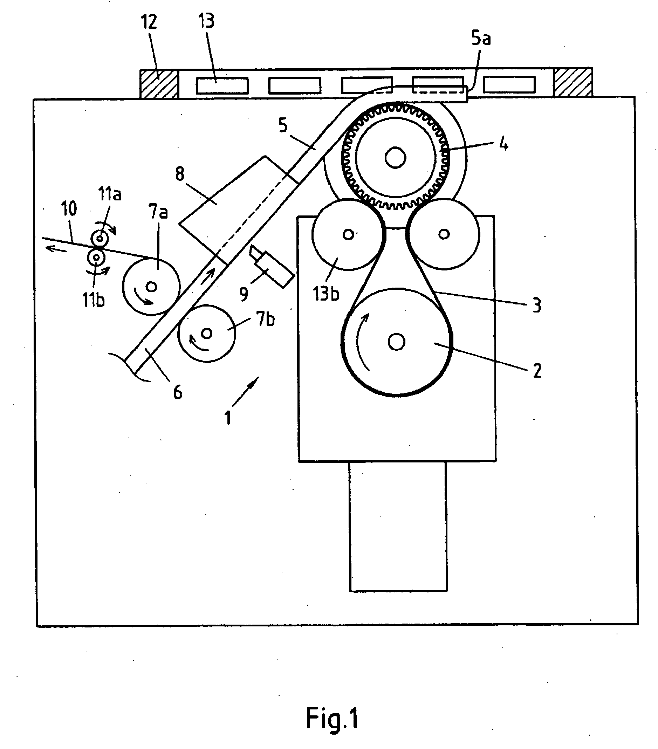

Die in Fig. 1 dargestellte erste Station umfasst einen stationären Anrollkopf 1 mit einer von einem Antrieb 2 über ein Band 3 angetriebenen Andrückrolle 4. Die Andrückrolle 4 kann zur Führung einer anzubringenden Dichtung 5 seitliche Bordscheiben 4a, 4b aufweisen. Die Dichtung 5 wird von einem Endlosdichtungsband 6 mittels als Rollten ausgebildeten Transportmitteln 7a, 7b von einer nicht dargestellten Vorratsrolle abgezogen und über eine Führungseinheit 8 der Andrückrolle 4 zugeführt. Im Bereich der Führungseinheit 8 ist als Ablängmittel 9 ein Messer der Dichtung zugeordnet. Das Endlosdichtungsband 6 weist an einer Seite eine Klebefläche auf, die von einer Abdeckfolie 10 abgedeckt ist. Die Abdeckfolie 10 wird mittels eines Abzugrollenpaares 11a, 11b vom Endlosdichtungsband 6 abgezogen, bevor es in die Führungseinheit 8 gelangt.

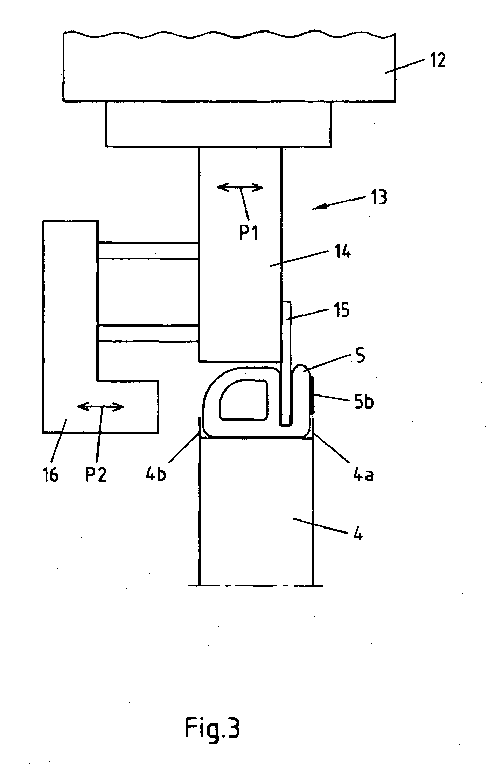

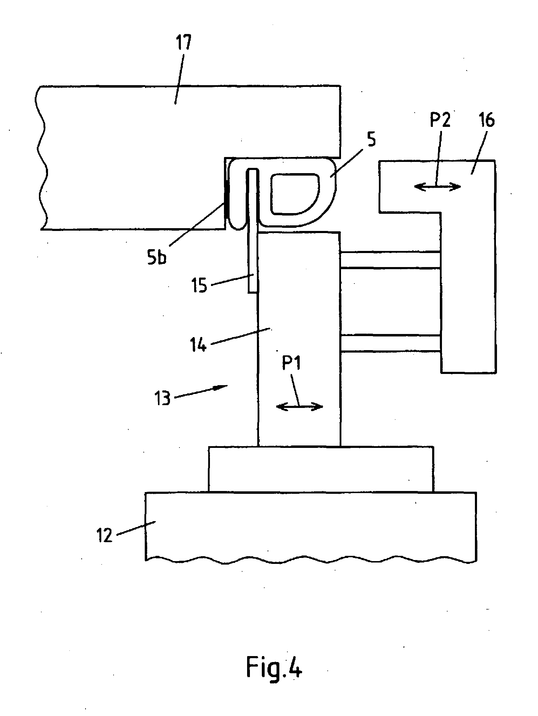

Zur ersten Station gehört ein Spannplatte 12, der mit einer Vielzahl von Aufsteck- und Andrückelementen 13 bestückt ist. Diese Aufsteck- und Andrückelemente 13 sind sowohl aus der Praxis als auch aus dem eingangs abgehandelten Stand der Technik (EP 0 849 106 B1) wohlbekannt. Die Aufsteck- und Andrückelemente 13 sind auf der Spannplatte 12, die keine geschlossene Platte im herkömmlichen Sinn zu sein braucht, sondern auch ein Rahmen oder Gestell oder dgl. sein kann, einrichtbar, damit sie auf die Kontur der jeweiligen Fahrzeugtür, wo die Dichtung angebracht werden soll, genau passt. Im wesentlichen bestehen die Aufsteck- und Andrückelemente 13 aus einem Grundkörper 14, der in Richtung des Pfeils P1 (siehe Fig. 3 und 4) verstellbar ist, einer daran befestigten Halteleiste 15 in Form einer federelastischen Zunge und einem in Richtung des Pfeils P2 (siehe Fig. 3 und 4) verstellbaren Andrückelement 16.

In der insoweit beschriebenen ersten Station wird die Dichtung 5 auf die Halteleiste 15 mittels der Andrückrolle 4 aufgesteckt. Nachdem der Aufsteckvorgang der abgelängten Dichtung 5 beendet ist, werden die Enden. 5a der Dichtung 5 stumpf miteinander verklebt, so dass ein geschlossener Dichtungsring entsteht. Die Dichtung 5 ist dann für das Anbringen an der Kfz-Tür vorbereitet.

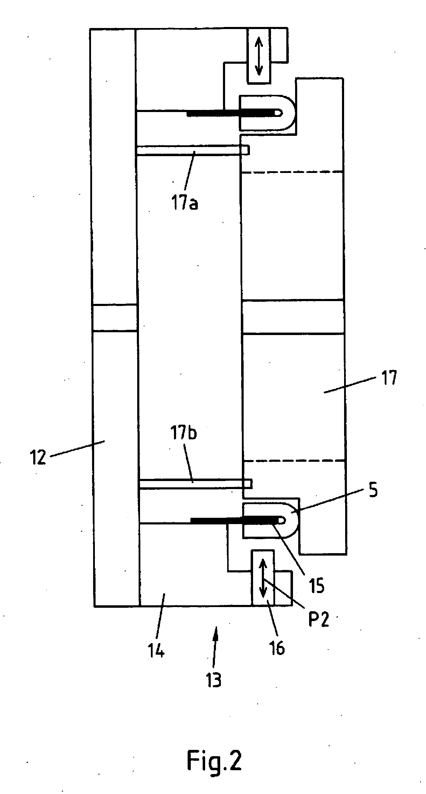

Wie Fig. 2 zeigt, wird in der zweiten Station eine Kraftfahrzeugtür 17 an die Spannplatte 12 herangeführt. Dies erfolgt mittels nicht dargestellter Führungs- und Transportmittel. Damit die Tür 17 passgenau an die Spannplatte 12 herangeführt werden kann, sind zwischen beiden Teilen sogenannte Referenzpunkte vorgesehen, die in Fig. 2 schematisch durch Stege 17a, 17b dargestellt sind. Um das Positionieren der Dichtung 5 an der Tür 17 zu erleichtern und ihren späteren Sitz zu optimieren, kann die auf die Halteleisten 15 der verschiedenen Aufsteck- und Andrückelemente 13 aufgesteckte Dichtung 5 aufgeweitet werden. Dafür ist die durch den Doppelpfeil schematisch dargestellte Verstellung der Basis vorgesehen. Sobald die Tür 17 die gewünschte Position in Bezug auf die Spannplatte 12 erreicht hat, treten die Andrückelemente 16 in Funktion. Dadurch wird die Dichtung 5 mit ihrer frei liegenden Klebefläche 5b (Fig. 3) an die Anklebefläche an der Peripherie der Tür 17 angedrückt. Nach Lösen der Andrückelemente 16 kann die Tür 17 von der Spannplatte 12 entfernt werden, dabei wird die nun an der Tür 17 angeklebte Dichtung 5 von der Halteleiste 15 abgezogen.

## Patentansprüche

1. Verfahren zum Applizieren einer umlaufenden Dichtung (5) an einem Öffnungsabschluss (17), insbesondere einer Tür, eines Kraftfahrzeuges, bei dem die von über die gesamte Länge der Dichtung (5) verteilten Aufsteck- und Andrückelementen (13) einer Spannplatte (12) als geschlossener Ring aufgespannt gehaltene Dichtung (5) mit einer freien Klebfläche passgenau an eine Anklebefläche des Öffnungsabschlusses (17) herangeführt und über ihre gesamte Länge angedrückt wird, bevor sie von den Aufsteck- und Andrückelementen (13) gelöst wird, **dadurch gekennzeichnet, dass** die Dichtung (5) mittels eines stationären Anrollkopfes (1) von einem Endlosdichtungsband (6) abgelängt und auf die Aufsteck- und Andrückelemente (13) aufgesteckt wird, indem die Spannplatte (12) mit den Aufsteck- und Andrückelementen (13) am Anrollkopf (1) vorbeibewegt wird, und dann an ihren beiden Enden (5a) zum Ring stumpf verklebt wird.

2. Verfahren nach Anspruch 1, **dadurch gekennzeichnet, dass** die Dichtung (5) nach Verbinden ihrer beiden Enden (5a) zu einem Ring radial aufgeweitet wird.

3. Verfahren nach Anspruch 1 oder 2, **dadurch gekennzeichnet, dass** beim Ablängen des an seiner Klebfläche mit einer Schutzfolie (10) abgedeckten Endlosdichtungsbandes (6) die Schutzfolie (10) abgezogen wird.

4. Anlage zum Applizieren einer umlaufenden Dichtung an einem Öffnungsabschluss (17), insbesondere einer Tür, eines Kraftfahrzeuges, insbesondere zur Anwendung bei einem Verfahren nach einem der Ansprüche 1 bis 3, **gekennzeichnet durch** eine erste Station, die einen stationären Anrollkopf (1) mit Transport- und Führungsmitteln (7a, 7b, 8) sowie Ablängmitteln (9) für die von einem Endlosdichtungsband (6) ablängbare.Dichtung (5) und einer gegenüber dem Anrollkopf (1) bewegbaren Spannplatte (12) mit darauf in ihren Positionen entsprechend der Kontur der Anklebefläche der Dichtung (5) am Öffnungsabschluss (17) einrichtbaren Aufsteck- und Andrückelementen (13) aufweist und **durch** eine zweite Station, in der die Spannplatte (12) und der Öffnungsabschluss (17) mit Transport- und Haltemitteln passgenau zusammenführbar sind und mit den Andrückelementen (13) die aufgesteckte Dichtung (5) an die Anklebefläche des Öffnungsabschlusses (17) andrückbar ist.

## Claims

1. Method for applying an encircling seal (5) to a closure (17) of an opening, in particular a door, of a motor vehicle, in which the seal (5), held taut as a closed ring by mounting and press-on elements (13) of a clamping plate (12), the mounting and press-on elements being distributed over the entire length of the seal (5), with a free adhesive surface is brought up, fitting precisely, to a adhesion surface of the closure (17) of the opening and is pressed on over its entire length, before it is released from the mounting and press-on elements (13), **characterized in that** the seal (5) is cut to length by means of a stationary roll-on head (1) from an endless sealing strip (6) and is mounted onto the mounting and press-on elements (13), by the clamping plate (12) being moved with the mounting and press-on elements (13) past the roll-on head (1), and is then glued flush at its two ends (5a) forming the ring.

2. Method according to Claim 1, **characterized in that** the seal (5), after the connecting of its two ends (5a), is widened radially to a ring.

3. Method according to Claim 1 or 2, **characterized in that** on cutting to length the endless sealing strip (6), which is covered with a protective film (10) on its adhesive surface, the protective film (10) is pulled off.

4. System for applying an encircling seal to a closure (17) of an opening, in particular a door of a motor vehicle, in particular for use in a method according to one of Claims 1 to 3, **characterized by** a first station which has a stationary roll-on head (1) with transport- and guidance means (7a, 7b, 8) and means (9) for cutting to length for the seal (5) which is able to be cut to length from an endless sealing strip (6) and a clamping plate (12), which is movable with respect to the roll-on head (1), with mounting and press-on elements (13) which are able to be arranged thereon in their positions corresponding to the contour of the adhesion surface of the seal (5) at the closure (17) of the opening, and by a second station in which the clamping plate (12) and the closure (17) of the opening are able to be brought together, fitting precisely, with transport- and holding means, and with the press-on elements (13) the mounted seal (5) is able to be pressed onto the adhesion surface of the closure (17) of the opening.

## Revendications

1. Procédé pour l'application d'un joint d'étanchéité (5) périphérique sur un élément de fermeture d'une ouverture (17), en particulier d'une porte de véhicule automobile, dans lequel le joint d'étanchéité (5) maintenu serré en forme de bague fermée, par des éléments de fixation et de pression (13) d'une plaque de serrage (12), répartis sur toute la longueur du joint d'étanchéité (5), est conduit, ajusté avec précision, à une surface de collage de l'élément de fermeture d'ouverture (17) avec une surface collante nue, et est pressé sur la totalité de sa longueur, avant d'être libéré des éléments de fixation et de pression (13), **caractérisé en ce que** le joint d'étanchéité (5) est mis à longueur à partir d'une bande d'étanchéité sans fin, au moyen d'un tête de sertissage (1), et est appliqué sur les éléments de fixation et de pression (13), lorsque la plaque de serrage (12) passe, avec les éléments de fixation et de pression, (13) devant le tête de sertissage (1), et ses deux extrémités (5a) sont ensuite collées bout-à-bout pour former une bague.

2. Procédé selon la revendication 1, **caractérisé en ce que** le joint d'étanchéité (5) est étiré dans la direction radiale, après que ses deux extrémités aient été assemblées en forme de bague.

3. Procédé selon revendication 1 ou 2, **caractérisé en ce que**, lors de la mise à longueur de la bande d'étanchéité sans fin, dont la surface collante est recouverte par une feuille de protection (10), ladite feuille de protection (10) est enlevée.

4. Dispositif pour l'application d'un joint d'étanchéité sans fin sur un élément de fermeture d'une ouverture (17), en particulier d'une porte d'un véhicule automobile, tout spécialement pour la mise en oeuvre d'un procédé selon l'une des revendications 1 à 3, **caractérisé par** une première station, qui présente un tête de sertissage (1) fixe (1), avec des moyens de transport et de guidage (7a, 7b, 8), ainsi que des moyens de mise à longueur (9) du joint d'étanchéité (5), qui peut être mis à longueur à partir d'une bande d'étanchéité sans fin (6), et une plaque de serrage (12), mobile par rapport au tête de sertissage (5), sur laquelle sont prévus des éléments de fixation et de pression (13), dont le positionnement peut être ajusté en fonction du contour de la surface collante du joint d'étanchéité (5, et par une deuxième station, dans laquelle la plaque de serrage (12) et l'élément de fermeture d'ouverture (17) peuvent être conduits avec précision l'une vers l'autre, par des moyens de transport et de fixation, le joint d'étanchéité (5) appliqué pouvant être pressé sur la surface de collage de l'élément de fermeture d'ouverture (17) au moyen des éléments de pression (13).
